# EUROPÄISCHE PATENTSCHRIFT

(11) **EP 1 729 616 B1**
(45) Veröffentlichungstag und Bekanntmachung des Hinweises auf die Patenterteilung: **24.10.2007**
(21) Anmeldenummer: 05817027.5
(22) Anmeldetag: 21.11.2005
(51) Int. Cl.: A47J 27/08

(54) **KOCHGEFÄSS**
COOKING VESSEL
RÉCIPIENT DE CUISSON

(30) Priorität: 23.11.2004 DE 102004056463
(43) Veröffentlichungstag der Anmeldung: 13.12.2006
(73) Patentinhaber: Gero Vertriebs GmbH, 42369 Wuppertal (DE)
(72) Erfinder: DE BASTOS REIS PORTUGAL, Mario, 4540-418 Mansores, Arouca (PT); ROMMERSKIRCHEN, Peter, 42369 Wuppertal (DE)
(74) Vertreter: Lippert, Hans-Joachim
(86) Internationale Anmeldenummer: PCT/DE2005/002085
(87) Internationale Veröffentlichungsnummer: WO 2006/056173

(56) Entgegenhaltungen:
- EP-A- 0 491 324
- DE-C1- 19 703 765
- US-A- 1 482 049
- US-A- 4 331 251

## Beschreibung

Die Erfindung betrifft ein Kochgefäß, insbesondere einen Dampfdruck-Kochtopf, umfassend ein topfförmiges Behältnis und einen für das druckdichte Verschließen des Behältnisses vorgesehenen Deckel, wobei das Behältnis einen umlaufenden nach außen abgewinkelten oder umgebördelten Topfrand aufweist, wobei an dem Deckel als Verschlusssegmente Klemmbacken vorgesehen sind, die parallel zur Ebene des Topfrandes in eine geöffnete oder verriegelte Stellung bewegbar sind und wobei die Klemmbacken den Topfrand in der verriegelten Stellung untergreifen.

Ein solches Kochgefäß ist beispielsweise aus der DE 4026166 A1 bekannt. Dort sind zur Fixierung des Deckels an dem Behältnis zwei diametral gegenüberliegende, nach unten innen abgewickelte Umfangskrallen an dem Deckel vorgesehen, die den Topfrand im verriegelten Zustand untergreifen. Diese als Umfangskrallen ausgebildeten Verschlusssegmente sind mittels eines axial bewegbaren Betätigungsknopfs radial ausstellbar bzw. einziehbar, was eine Verriegelung bzw. Entriegelung zwischen dem Deckel und dem Behältnis zur Folge hat.

Dieser Verschlussmechanismus ist insoweit vorteilhaft, dass keine genaue Positionierung des Deckels auf dem Behältnis erforderlich ist, um das Behältnis druckdicht zu verschließen. Das bekannte Kochgefäß ist allerdings mit dem Nachteil behaftet, dass die Mechanik zum Ver- und Entriegeln des Deckels eine relativ hohe Krafteinwirkung seitens des Benutzers erfordert.

Zur Lösung dieses Problems wird in der DE 29510989 ein Druckkochbehälter vorgeschlagen, an dem in ähnlicher Art und Weise radial bewegbare, diametral gegenüberliegend zueinander angeordnete Klemmbacken vorgesehen sind, deren Bewegung durch ein radial bewegbar auf dem Deckel angebrachtes Steuerorgan bewirkt wird. Die Betätigung des Steuerorgans erfolgt über einen in axialer Richtung bewegbar angebrachten Steuerknopf auf dem Deckel in ähnlicher Art und Weise, wie dies bereits in der DE 4026166 vorgeschlagen ist. Diese Lösung ist, was die erforderlichen Bedienungskräfte anbelangt, gegebenenfalls günstiger als die in der DE 4026116 beschriebene Lösung, wobei es grundsätzlich kinematisch aufwändig und ungünstig ist, eine Axialbewegung des Betätigungsknopfes in eine Radialbewegung der Klemmbacken umzusetzen.

Darüber hinaus sind die bekannten Lösungen mit dem Nachteil behaftet, dass die radiale Öffnungs- und Schließbewegung zweier diametral gegenüberliegender Klemmbacken, sowohl was den Hub bzw. den Stellweg anbelangt als auch was den Kraftaufwand aufgrund der Hebelverhältnisse anbelangt, ungünstig ist. Schließlich erfordert eine solche Lösung auch verhältnismäßig hohe Zuhaltkräfte in der verriegelten Stellung des Deckels.

Nach der EP 0491324 A1 ist ein Deckel für Kochtöpfe mit umgelegtem Rand bekannt, wobei zwei bogenförmige Spannsegmente vorgesehen sind, die jeweils an einer gesonderten Schwenkachse angelenkt sind und die mit einem um eine senkrechte Achse verschwenkbaren Verschlusshebel verbunden sind. Die Spannsegmente sind dabei im Innenrand des Deckels angeordnet und umschließen den Kochtopf unterhalb seines umgelegten Randes. Der Verschlusshebel ist am Außenrand des Deckels angeordnet und wirkt mit zwei Bügeln zusammen, die an den Enden der Spannsegmente vorgesehen sind, wobei die Bügel eine Führung für am Verschlusshebel angebrachte Bolzen bilden. Durch Drehung des Verschlusshebels können die Spannsegmente in gewissem Grade gleichmäßig zwischen einer geschlossenen und geöffneten Zustellung hin- und herbewegt werden.

Der Erfindung liegt die Aufgabe zugrunde, den Stand der Technik zu verbessern, die oben genannten Nachteile zu beseitigen und in Bezug auf den zuletzt genannten Stand der Technik eine sehr präzise Gleichlaufeinrichtung zu erzielen.

Diese Aufgabe wird mit Hilfe der Merkmale des Anspruchs 1 gelöst.

Auf diese Art und Weise wird eine nahezu vollständige Umschließung und ein vollständiges Untergreifen des Topfrandes mit den Klemmbacken bewirkt, was sowohl sicherheitstechnisch als auch hinsichtlich der sich hieraus ergebenden Hebelverhältnisse für das Verschließen und Öffnen der Klemmbacken günstig ist. Ein die Öffnungs- und Schließbewegung der Klemmbacken bewirkendes Steuerorgan kann beispielsweise an einem Ende der Klemmbacken angreifen, wohingegen die Lagerung der Klemmbacken auf der diametral gegenüberliegenden Seite des Deckelrandes vorgesehen sein kann. Die erfindungsgemäße Anordnung hat den Vorzug, dass eine Umlenkung der Steuer- bzw. Bedienkräfte in die Ebene des Topfrandes nicht erforderlich ist, so dass sich diese Konstruktion insbesondere durch geringe erforderliche Betätigungskräfte seitens des Benutzers auszeichnet.

Vorzugsweise sind die Klemmbacken über eine gemeinsame Achse miteinander verbunden, die sich durch den Randbereich des Deckels erstreckt. Die Achse dient dann gleichzeitig zweckmäßigerweise der unverlierbaren Befestigung der Klemmbacken an dem Deckel.

Vorteilhaft ist es, wenn die Steuerhebel jeweils einen Betätigungsarm und einen Führungsarm aufweisen, wobei der Führungsarm jeweils mit einer Klemmbacke in Wirkverbindung steht. Die Klemmbacken können jeweils über Mitnehmerelemente, beispielsweise Mitnehmerzapfen, in Durchbrüchen der Führungsarme geführt sein. In diesem Fall bilden die Mitnehmerzapfen und die Durchführung eine Kulissenführung für die Schwenkbewegung der Steuerhebel.

Beispielsweise können die Steuerhebel nach Art von Scherenschenkeln zueinander angeordnet sein und über eine Verzahnung ineinander greifen, so dass eine Betätigung der Hebel eine synchrone Bewegung der Klemmbacken zur Folge hat.

Besonders zweckmäßig ist es, wenn die Klemmbacken federbelastet in der geschlossenen Stellung gehalten werden.

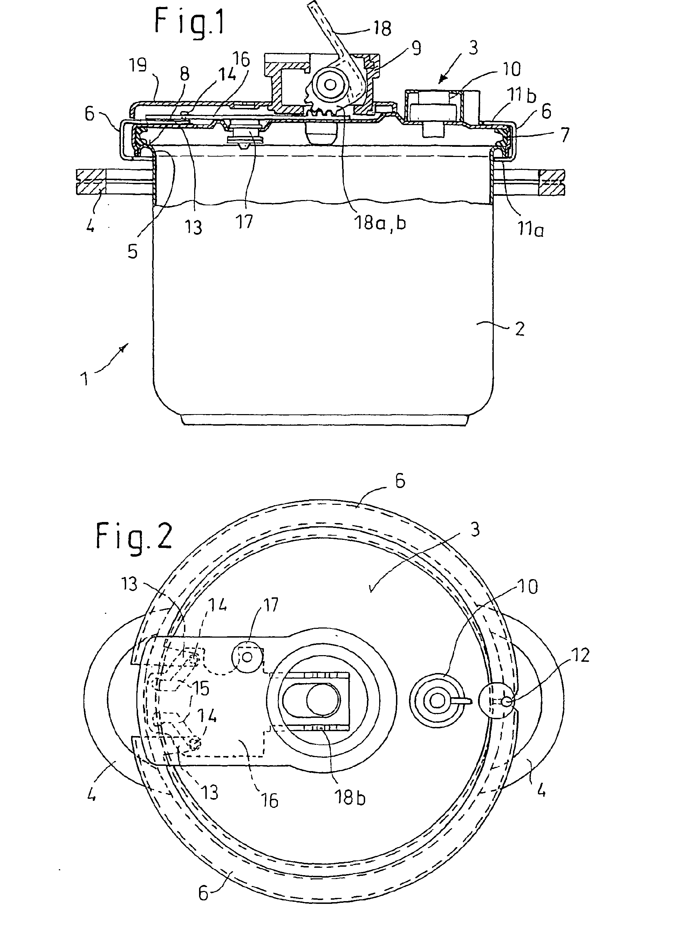

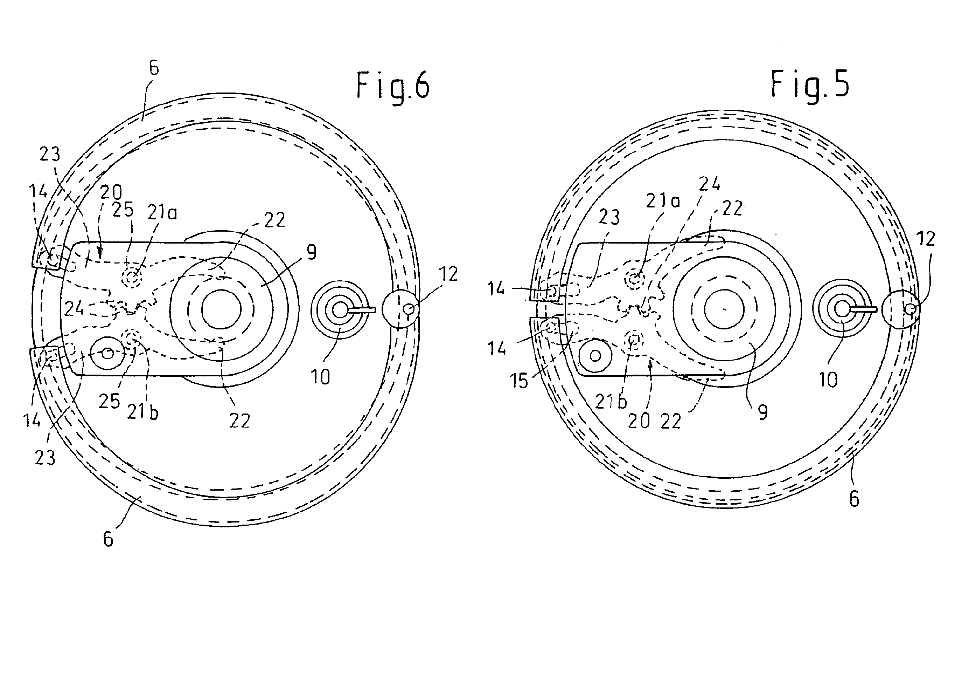

Die Erfindung wird nachstehend anhand eines in den Zeichnungen erläuterten Ausführungsbeispiels erörtert. Die erfindungsgemäßen Merkmale sind insbesondere aus dem Ausführungsbeispiel gemäß Fig. 5 und 6 zu ersehen. Das Ausführungsbeispiel gemäß Fig. 1 bis 4 fällt nur teilweise unter die Erfindung und dient im Wesentlichen zur näheren Erläuterung verschiedener Einzelmerkmale.

Es zeigen:
- Fig. 1: eine schematische Ansicht des Kochgefäßes gemäß der Erfindung nach einem Ausführungsbeispiel, teilweise im Schnitt,
- Fig. 2: eine schematische Draufsicht auf das in Figur 1 gezeigte Kochgefäß,
- Fig. 3: das in Figur 1 dargestellte Kochgefäß in verriegeltem Zustand,
- Fig. 4: eine schematische Draufsicht auf das in Figur 3 dargestellte Kochgefäß,
- Fig. 5: eine schematische Draufsicht auf ein Kochgefäß nach einem anderen Ausführungsbeispiel gemäß der Erfindung mit verriegeltem Deckel und
- Fig. 6: das in Figur 5 dargestellte Kochgefäß in schematischer Ansicht von oben mit entriegeltem Deckel.

Das Kochgefäß 1 gemäß der Erfindung ist als Druckkochbehälter bzw. Schnellkochtopf mit einem Topf 2 und einem Deckel 3 zum druckdichten Verschließen des Topfs 2 ausgebildet. Der Topf 2 umfasst zwei Handgriffe 4 sowie einen nach außen abwärts umgebogenen Rand 5, der von als Klemmbacken 6 ausgebildeten Verschlusssegmenten des Deckels 3 untergriffen wird, und zwar unter Zwischenlage einer Dichtung 7, die als umlaufende Dichtschnur ausgebildet ist, wobei jedoch in Figur 1 nur ein Teil der Dichtung 7 dargestellt ist. Die Dichtung 7 liegt bei aufgesetztem Deckel 3 auf der von dem umgebogenen Topfrand 5 gebildeten, nach oben weisenden Dichtfläche 8 auf.

Der Deckel 3 umfasst in bekannter Art und Weise einen etwa mittig angeordneten Griffknopf 9, ein Druckventil 10 sowie einen nachstehend noch zu beschreibenden Betätigungsmechanismus zum Ver- und Entriegeln der Klemmbacken 6.

In den Figuren 1 bis 4 ist eine Variante des erfindungsgemäßen Kochgefäßes 1 dargestellt, wohingegen in den Figuren 5 und 6 eine alternative Ausgestaltung dargestellt ist.

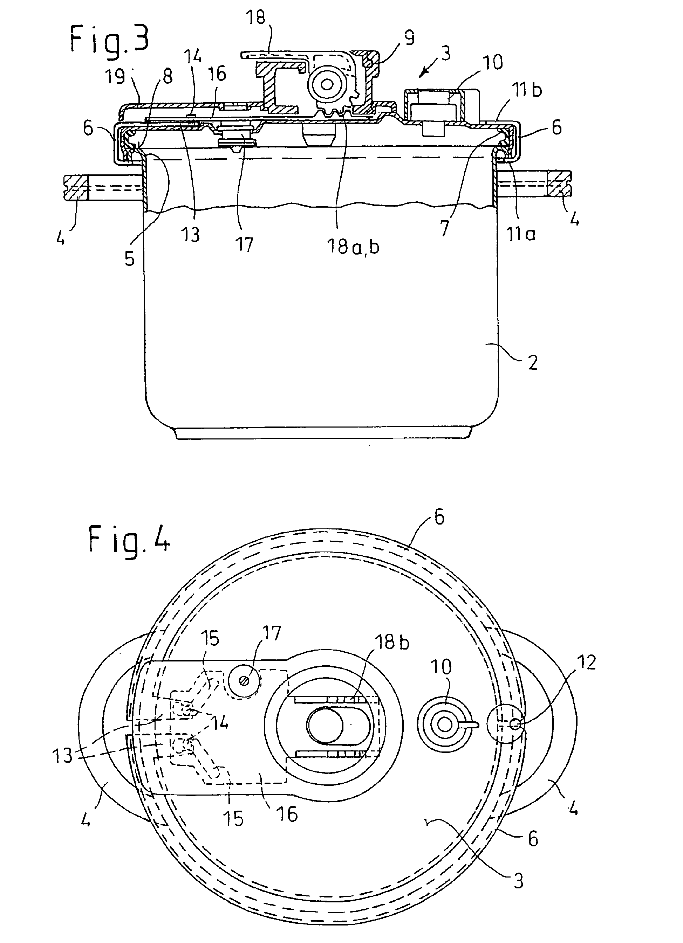

Aus Gründen der Übersichtlichkeit wird zunächst auf das in den Figuren 1 bis 4 dargestellte Ausführungsbeispiel eingegangen. Wie insbesondere aus der Draufsicht zu entnehmen ist, sind die Klemmbacken 6 als Kreisbogensegmente ausgebildet, die nahezu 180° des Deckelumfangs und somit des Topfrandes 5 umschließen. Im Querschnitt sind die Klemmbacken 6, wie dies aus Figur 1 ersichtlich ist, als U-Profil ausgebildet, wobei der dem Topf 2 zugekehrte Schenkel 11 b der Klemmbacken im verriegelten Zustand (siehe Figur 3) den Topfrand 5 nahezu über den gesamten Umfang (bezogen auf beide Klemmbacken 6) untergreift.

Der gegenüberliegende Schenkel 11 a der Klemmbacken stützt sich auf dem Deckel 3 ab. Insgesamt umgreifen die Klemmbacken den Deckel 3 und den Topfrand 5 unter Zwischenlage der Dichtung 7.

Mit 12 ist die Achse bezeichnet, um welche beide Klemmbacken 6 in der Ebene des Topfrandes 5 bzw. in der Ebene des Deckels 3 schwenkbar angeordnet sind. Über die Achse 12 sind die Klemmbacken 6 gleichzeitig an dem Deckel 3 befestigt.

An den von der Achse 12 abliegenden Enden der Klemmbacken 6 sind jeweils Hebelfortsätze 13 mit Mitnehmerzapfen 14 vorgesehen, wobei sich die Mitnehmerzapfen etwa parallel zur Längsmittelachse des Kochgefäßes 1 (in Figur 2 aus der Zeichnungsebene heraus) erstrecken. Die Mitnehmerzapfen 14 sind in langlochartigen Durchbrüchen 15 einer linear bewegbaren Steuerplatte 16 geführt. Die Durchbrüche 15 in der Steuerplatte 16 bilden für die Klemmbacken 6 eine Kulissenführung, wobei eine Verschiebung der Steuerplatte 16 von der Längsmittelachse des Kochgefäßes 1 in Richtung auf den Topfrand 5 ein Aufschwenken der den Topfrand 5 untergreifenden Klemmbacken in die in Figur 2 gezeigte entriegelte Stellung bewirkt und wobei eine Bewegung der Steuerplatte 16 in Richtung auf die Längsmittelachse des Kochgefäßes 1 in die in Figur 4 gezeigte Stellung ein Einschwenken der Klemmbacken und ein Verriegeln des Deckels 3 bewirkt. Dabei gleiten die Mitnehmerzapfen 14 in den Durchbrüchen 15 in die in Figur 4 gezeigte Lage.

Die Stellbewegung der Steuerplatte 16 wird über einen in dem Griffknopf 9 schwenkbar gelagerten Zahnhebel 18 bewirkt, dessen Verzahnung 18 a mit einem Zahntrieb 18 b der Steuerplatte 16 kämmt. Wie dies aus der Zusammenschau der Figuren 3 und 1 ersichtlich ist, bewirkt ein Herausheben des Zahnhebels 18 aus dem Griffknopf 9 eine Verstellung der Steuerplatte 16 in Richtung auf den Topfrand 5 und ein Öffnen der Klemmbacken 6. Die Steuerplatte 16 ist gegen Zugriff geschützt unter einer Abdeckung 19 angeordnet.

Eine alternative Variante des Kochgefäßes gemäß der Erfindung ist in den Figuren 5 und 6 dargestellt. Gleiche Bauteile sind mit gleichen Bezugszeichen versehen.

Bei dem in den Figuren 5 und 6 dargestellten Ausführungsbeispiel sind die Mitnehmerzapfen 14 direkt an den Enden der Klemmbacken 6 befestigt. Die Mitnehmerzapfen 14 sind in Durchbrüchen 15 zweier schwenkbar gelagerter Steuerhebel 20 geführt. Die Steuerhebel 20 sind jeweils schwenkbar um die Achsen 21 a und 21 b des Deckels 3 gelagert. Die Steuerhebel 20 sind nach Art von Scherengliedern zueinander angeordnet und bilden in der in Figur 5 dargestellten verriegelten Stellung der Klemmbacken 6 jeweils zwei mit Abstand zueinander angeordnete Betätigungsarme 22 sowie zwei nahezu aneinander liegende, sich parallel zueinander erstreckende Führungsarme 23. Auf den einander zugewandten Seiten im Bereich der Achsen 21 a, b sind die Steuerhebel 20 jeweils mit einer Verzahnung 24 versehen, wobei die einzelnen Zähne der Steuerhebel 20 miteinander kämmen, so dass die Verzahnung 24 als Gleichlaufeinrichtung zur Synchronisierung der Schwenkbewegung der Steuerhebel 20 dient.

Wie vorstehend bereits erwähnt, sind die Mitnehmerzapfen 14 der Klemmbacken in Durchbrüchen 15 an den den Klemmbacken 6 zugewandten Enden der Führungsarme 23 schwenkbar und verschieblich gelagert. Die langlochartigen Durchbrüche 15 wirken wie bei dem zuvor beschriebenen Ausführungsbeispiel als Kulissenführung für die Klemmbacken 6 beim Öffnen und Schließen derselben.

Ein Druck auf die Betätigungsarme 22 in der in Figur 5 dargestellten Stellung der Steuerhebel 20 bewirkt ein Auseinanderschwenken der Führungsarme 23 und ein Aufschwenken der Klemmbacken 6 in die in Figur 6 gezeigte entriegelte Stellung.

Die Bewegung der Betätigungsarme 22 kann beispielsweise über eine in dem Griffknopf 9 oder an dem Griffknopf 9 angeordnete mit diesem drehbare Exzenterscheibe erfolgen. So würde durch Drehung des Griffknopfes 9 um die Längsmittelachse des Kochgefäßes 1 eine Ausstellung der Betätigungsarme zwecks Verriegelung bewirkt.

Die Betätigungsarme 22 sind bei dem beschriebenen Ausführungsbeispiel unmittelbar zur Handbetätigung durch den Benutzer vorgesehen. Es ist dann ebenfalls zweckmäßig, wenn diese federbelastet in ausgestellter Lage gehalten werden bzw. wenn die Klemmbacken 6 federbelastet in verriegelter Stellung gehalten werden. Hierzu sind Federelemente in Form von Spiralfedern 25 vorgesehen, die um die Achsen 21 a, 21 b angeordnet sind und in der Zeichnung nur andeutungsweise dargestellt sind.

### Kochgefäß

- 1: Kochgefäß
- 2: Topf
- 3: Deckel
- 4: Handgriffe
- 5: Topfrand
- 6: Klemmbacken
- 7: Dichtung
- 8: Dichtfläche
- 9: Griffknopf
- 10: Druckventil
- 11 a, b: Schenkel der Klemmbacken
- 12: Achse
- 13: Hebelfortsätze
- 14: Mitnehmerzapfen
- 15: Durchbrüche
- 16: Steuerplatte
- 17: Sicherheitsventil
- 18: Zahnhebel
- 18 a: Verzahnung
- 18 b: Zahntrieb
- 19: Abdeckung
- 20: Steuerhebel
- 21 a, b: Achsen
- 22: Betätigungsarm
- 23: Führungsarm
- 24: Verzahnung
- 25: Spiralfedern

## Patentansprüche

1. Kochgefäß (1), insbesondere Dampfdruck-Kochtopf, mit einem topfförmigen Behältnis und einem für das druckdichte Verschließen des Behältnisses vorgesehenen Deckel (3), wobei
- das Behältnis einen umlaufenden, nach außen abgewinkelten oder umgebördelten Topfrand (5) aufweist,
- an dem Deckel (3) als Verschlusssegmente Klemmbacken (6) vorgesehen sind, die parallel zur Ebene des Topfrandes (5) mittels eines Steuerhebelmechanismus in eine geöffnete oder verriegelte Stellung bewegbar sind,
- die Klemmbacken (6) den Topfrand (5) in der verriegelten Stellung untergreifen,
- die Klemmbacken (6) sich jeweils über nahezu den halben Umfang des Deckels (3) erstrecken und um eine Achse (12) schwenkbeweglich gelagert sind, die sich parallel und mit Abstand zur Längsmittelachse des Behältnisses erstreckt,
- der Steuerhebelmechanismus (20; 16) eine Gleichlaufeinrichtung aufweist,
- dass die Klemmbacken (6) an ihren von der Achse (12) abliegenden Enden schwenkbeweglich mit Steuerhebeln (20) verbunden sind, die ihrerseits jeweils schwenkbar auf dem Deckel (3) gelagert sind und eine Öffnungs- und Schließbewegung auf die Klemmbacken (6) übertragen, und
- dass die Schwenkbewegung der Steuerhebel (20) über die Gleichlaufeinrichtung gekoppelt ist.

2. Kochgefäß nach Anspruch 1, **dadurch gekennzeichnet, dass** die Steuerhebel (20) jeweils einen Betätigungsarm (22) und einen Führungsarm (23) aufweisen, wobei der Führungsarm (23) jeweils mit einer Klemmbacke (6) in Wirkverbindung steht.

3. Kochgefäß nach Anspruch 2, **dadurch gekennzeichnet, dass** die Klemmbacken (6) jeweils über Mitnehmerelemente (14) in Durchbrüchen (15) der Steuerhebel (20) geführt sind.

4. Kochgefäß nach einem der Ansprüche 1 bis 3, **dadurch gekennzeichnet, dass** die Steuerhebel (20) über eine Verzahnung (24) ineinander greifen.

5. Kochgefäß nach einem der Ansprüche 1 bis 4, **dadurch gekennzeichnet, dass** die Klemmbacken (6) federbelastet in der geschlossenen Stellung gehalten werden.

6. Kochgefäß nach einem der Ansprüche 1 bis 5, **dadurch gekennzeichnet, dass** die Steuerhebel (20) nach Art von Scherengliedern zueinander angeordnet sind und je einen Führungsarm (23), der mit einer der Klemmbacken (6) in Verbindung steht, sowie einen Betätigungsarm (22) aufweisen, wobei ein Druck auf die Betätigungsarme (22) ein Auseinanderschwenken der Führungsarme und damit ein Aufschwenken der Klemmbacken (6) bewirkt.

7. Kochgefäß nach einem der Ansprüche 1 bis 6, **dadurch gekennzeichnet, dass** die Klemmbacken (6) über eine gemeinsame Achse (12) miteinander verbunden sind, die sich durch den Randbereich des Deckels (3) erstreckt.

## Claims

1. Cooking vessel (1), particularly a steam pressure cooker, comprising a pot-like container and a lid (3) provided for pressure-tight sealing of the container, where
- the container displays a circumferential, outwardly bent or flanged pot edge (5),
- clamping jaws (6) are provided on the lid (3), which serve as locking segments and can be moved into an open or locked position parallel to the plane of the pot edge (5),
- the clamping jaws (6) reach under the pot edge (5) in locked position,
- the clamping jaws (6) each extend over almost half the circumference of the lid (3), and in that the clamping jaws (6) are mounted in a manner permitting pivoting movement about a pivot (12) extending parallel to, and at a distance from, the longitudinal centre line of the container
- the pivoting movement of the control levers (20; 16) is provided with a synchronisation device.
- the clamping jaws (6) remote from the pivot (12) are connected in pivoting fashion to control levers (20), which are in turn each mounted on the lid (3) in pivoting fashion and transmit an opening and closing movement to the clamping jaws (6),
- and that the pivoting movement of the control levers (20) is coupled via a synchronisation device.

2. Cooking vessel according to Claim 1, **characterised in that** the control levers (20) each display an operating arm (22) and a guide arm (23), where the guide arm (23) is in each case actively connected to a clamping jaw (6).

3. Cooking vessel according to Claim 2, **characterised in that** the clamping jaws (6) are each guided via driving elements (14) in openings (15) of the control levers (20).

4. Cooking vessel according to one of Claims 1 to 3, **characterised in that** the control levers (20) engage each other via toothing (24).

5. Cooking vessel according to one of Claims 1 to 4, **characterised in that** the clamping jaws (6) are retained in the closed position by spring force.

6. Cooking vessel according to one of Claims 1 to 5, **characterised in that** the control levers (20) are arranged relative to each other in the manner of scissor elements and are provided with each one guide arm (23), which is connected to one of the clamping jaws (6), and which has one operating arm (22) where pressure on the operating arms (22) causes the guide arms to swing apart and thus the clamping jaws (6) to swing open.

7. Cooking vessel according to one of Claims 1 to 6, **characterised in that** the clamping jaws (6) are connected to each other via a common pivot (12), which extends through the edge area of the lid (3).

## Revendications

1. Récipient de cuisson (1), notamment un autocuiseur, avec un contenant en forme de marmite et un couvercle (3) destiné à fermer le contenant de manière hermétique à la pression, le contenant présentant un bord (5) circonférentiel recourbé ou retourné vers l'extérieur, des mâchoires de serrage (6) en tant que segments de verrouillage, mobiles en une position ouverte ou en une position verrouillée parallèlement au plan du bord (5) du contenant, au moyen d'un mécanisme de levier de commande, étant prévues sur le couvercle (3), les mâchoires de serrage (6) étant en prise par le bas avec le bord (5) du contenant lorsqu'elles sont en position verrouillée, les mâchoires de serrage (6) s'étendant chacune sur presque la moitié de la surface du couvercle (3) et étant montées pivotantes autour d'un axe (12) parallèle et espacé de l'axe médian longitudinal du récipient, le mécanisme de levier de commande (20 ; 16) présentant un dispositif de synchronisation, tandis que les mâchoires de serrage (6) sont reliées pivotantes au niveau de leur extrémité éloignée de l'axe (12), avec des leviers de commande (20) montés eux-mêmes respectivement pivotants sur le couvercle (3) et transmettant un mouvement d'ouverture et de fermeture sur les mâchoires de serrage (6) et que le mouvement pivotant des leviers de commande (20) est couplé par le biais du dispositif de synchronisation.

2. Récipient de cuisson selon la revendication 1, **caractérisé en ce que** les leviers de commande (20) présentent respectivement un bras d'actionnement (22) et un bras de guidage (23), sachant que le bras de guidage (23) est à chaque fois en liaison fonctionnelle avec une mâchoire de serrage (6).

3. Récipient de cuisson selon la revendication 2, **caractérisé en ce que** les mâchoires de serrage (6) sont respectivement guidées dans des ajours (15) des leviers de commande (20) par le biais d'éléments d'entraînement (14).

4. Récipient de cuisson selon l'une quelconque des revendications 1 à 3, **caractérisé en ce que** les leviers de commande (20) entrent en prise mutuelle par le biais d'une denture (24).

5. Récipient de cuisson selon l'une quelconque des revendications 1 à 4, **caractérisé en ce que** les mâchoires de serrage (6), sollicitées par ressort, sont maintenues en position fermée.

6. Récipient de cuisson selon l'une quelconque des revendications 1 à 5, **caractérisé en ce que** les leviers de commande (20) sont disposés entre eux à la manière d'éléments de ciseaux et présentent, à chaque fois, un bras de guidage (23) en liaison avec l'une des mâchoires de serrage (6), ainsi qu'un bras d'actionnement (22), sachant qu'une pression sur les bras d'actionnement (22) occasionne une séparation par basculement des bras de guidage et par conséquent, un basculement des mâchoires de serrage (6).

7. Récipient de cuisson selon l'une quelconque des revendications 1 à 6, **caractérisé en ce que** les mâchoires de serrage (6) sont reliées ensemble par le biais d'un axe (12) commun qui s'étend à travers la région de bord du couvercle (3).
